# EUROPEAN PATENT SPECIFICATION

(11) **EP 0 909 939 B1**
(45) Date of publication and mention of the grant of the patent: **28.12.2005**
(21) Application number: 98119333.7
(22) Date of filing: 13.10.1998
(51) Int. Cl.: G01C 21/02, B64G 1/36, G01S 3/786

(54) **Earth sensor**
Erdsensor
Senseur de terre

(30) Priority: 14.10.1997 JP 28089197
(43) Date of publication of application: 21.04.1999
(73) Proprietor: NEC TOSHIBA Space Systems, Ltd., Yokohama, Kanagawa 224-8555 (JP)
(72) Inventor: Koyama, Hideaki, Minato-ku, Tokyo (JP)
(74) Representative: Vossius & Partner

(56) References cited:
- EP-A- 0 405 678
- FR-A- 2 764 976
- US-A- 3 697 760

## Description

The present invention relates to an earth sensor which is mounted on a satellite or the like and which can stably perform an attitude detection at a high precision.

Heretofore, as a system of a sensor for executing an attitude control of a satellite or the like or detecting pointing angles of an observation sensor, there are various systems such as mirror scan type, static thermal irradiation balance type, conical scan type, and mechanical chopping type. Particularly, as for a geosynchronous satellite in which long life and a high precision attitude measurement are demanded, a two-axis earth sensor of a mirror scan type has been solely used in many cases.

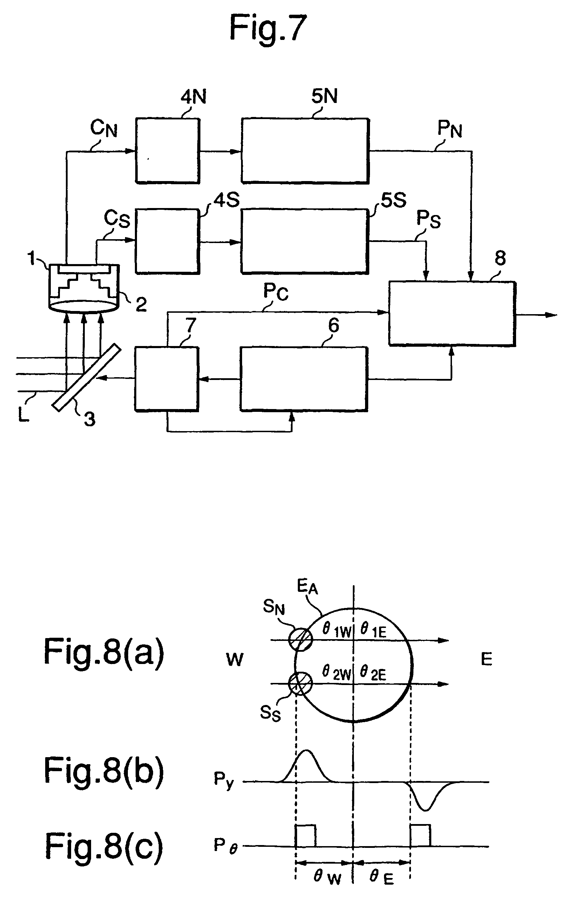

Fig. 7 shows a constructional diagram showing an example of a conventional earth sensor of the mirror scan type. In the diagram, reference numeral 1 denotes an infrared photodetector comprising a pair of single elements, namely, a north scanning element for receiving lights which are spot beams used for scanning of the north side of the earth and a south scanning element for receiving lights which are spot beams used for scanning of the south side; 2 an optical package for enclosing the infrared photodetector 1; and 3 a mirror for reflecting lights L which are spot beams used for the scanning, thereby impinging on the photodetector 1.

Reference numeral 4N denotes a preamplifier for a signal of the north scanning element; 4S a preamplifier for a signal of the south scanning element; 5N a comparator which is connected to the preamplifier 4N and which forms a pitch pulse; 5S a comparator which is connected to the preamplifier 4S and which forms a pitch pulse; 6 a mirror scan drive control unit; 7 a drive unit which has a drive coil and an angle encoder and which outputs center pulses; and 8 an angle generator (signal processing unit) for obtaining an angle between the center of the earth and the west end and an angle between the center of the earth and the east end on the basis of pitch pulses PN and PS from the comparators 5N and 5S and a center pulse PC from the drive unit 7.

In the earth sensor, as shown in Fig. 8(a), a spot beam SN is allowed to scan the north side of the earth EA from the west W to the east E and a spot beam SS is allowed to scan the south side of the earth EA from the west W to the east E. The lights L which are the spot beams SN, SS used for the scanning are received by the single elements of the infrared photodetector 1 and signals CN and CS having a waveform Py as shown in Fig. 8(b) are generated. Those signals CN and CS are amplified by the preamplifiers 4N and 4S, respectively. The pitch pulses PN and PS having a waveform Pθ as shown in Fig. 8(c) are formed by the comparators 5N and 5S.

After that, on the basis of the pitch pulses PN and PS from the comparators 5N and 5S and the center pulse PC from the drive unit 7, angles θ1W and θ2W between the center of the earth and the west end and angles θ1E and θ2E between the center of the earth and the east end are obtained by the angle generator 8. By using those obtained angles θ1W, θ2W, θ1E, and θ2E, a pitch angle θP and a roll angle θR made by the center of the earth and an optical axis of the earth sensor are obtained on the basis of the following expressions.$\begin{matrix}\begin{matrix}\text{θP = 1/4(- θ1W - θ2W + θ1E + θ2E)} \\ \text{θR = 1/2(θ1W - θ2W + θ1E - 62E)}\end{matrix}\end{matrix}$

As an example of the earth sensor having a construction other than the above, there is the mirror scan type two-axis earth sensor disclosed in JP-A- 61-200099. The earth sensor uses a division mirror arranged so as to enable to scan the upper half portion and the lower half portion of the earth and a scan mirror for reciprocatingly scanning the upper half portion and the lower half portion of the earth right and left.

As another example, there is the earth sensor disclosed in JP-A- 58-085798. The earth sensor is constructed in such a manner that a plurality of infrared detectors for detecting an image of the earth are placed to a periphery of a substrate on which a thermal infrared image of the earth is formed.

As a first problem point of the conventional earth sensor, there is a problem that when the sensor is mounted on the satellite, a mechanical vibration of a satellite body which the satellite has interferes in the mirror drive unit of the earth sensor, so that such an inconvenience that the mirror drive unit causes mechanical resonance occurs.

For example, when frequency components of a wheel, a solar paddle drive unit, the other devices having the mechanical vibration, and the like are resonated with a mirror torsion bar of the earth sensor, such an inconvenience that a normal mirror scan cannot be performed or the like occurs.

As a second problem point, there is a point that in the conventional earth sensor, since its mechanical vibrating mechanism system occupies a large area of the whole structure, a realization of compactness and light-weightedness is close to limits, so that it is difficult to realize to further improve the compactness and the light-weightedness.

EP-A-0 405 678 discloses an earth sensor according to the preamble of claim 1.

The present invention is made in consideration of the above situations and it is object to provide an earth sensor in which there is no fear that a mechanical resonance is caused, which can stably perform an attitude detection at a high precision, and in which the compactness and light-weightedness can be realized. This object is achieved with the features of the claims.

According to the earth sensor of the invention, the center of the infrared detector having a plurality of pixels is set to an optical axis of the earth sensor, angles θE, θW, θS, and θN between an pixel of the center and pixels of the end portions in the directions of the east, west, south, and north are obtained by counting the number of pixels from the center pixel up to the pixels of the end portions in the directions of the east, west, south, and north, and a pitch angle θP and a roll angle θR made between the center axis of the earth and the optical axis of the earth sensor are obtained on the basis of those angles θE, θW, θS, and θN.

Consequently, by counting the number of pixels from the pixel at the center of the infrared detector up to the pixels of the end portions, the pitch angle θP and roll angle θR made by the earth center axis and the optical axis of the earth sensor can be obtained, the mechanism such as a conventional mirror drive unit which causes vibration is not needed, there is no fear that mechanical resonance with the mechanism is caused, so that the high precision pitch angle θP and roll angle θR can be obtained in a stable state. Therefore, it is possible to stably detect an attitude detection at a high precision.

Since the mechanical vibrating mechanism system such as a conventional mirror drive unit is not needed, it is possible to realize compactness and light-weightedness.
Fig. 1 is a constructional diagram showing an earth sensor illustrating the present invention.
Fig. 2 is a plan view showing a detecting element of this earth sensor.
Fig. 3 is a graph showing a relation between pixels and output signals of the detecting element of this earth sensor.
Fig. 4 is a constructional diagram showing an earth sensor of the embodiment of the invention.
Fig. 5 is a plan view showing a detecting element of the earth sensor of the embodiment of the invention.
Fig. 6 is a graph showing a relation between pixels and output signals of the detecting element of the earth sensor of the embodiment of the invention.
Fig. 7 is a constructional diagram showing a conventional earth sensor.
Fig. 8(a) to 8(c) are graphs showing a relation between a detecting element and output signals of the conventional earth sensor.

Embodiments of an earth sensor of the present invention will now be explained on the basis of the drawings.

### Illustrating Embodiment

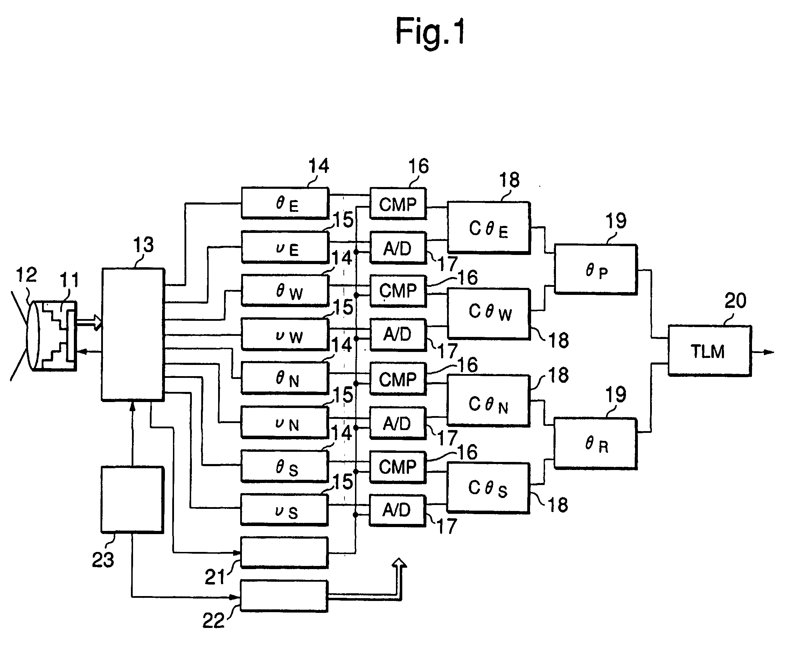

Fig. 1 is a constructional diagram showing an earth sensor illustrating the invention. In the diagram, reference numeral 11 denotes a non-cooling two-dimensional array detecting element (infrared detector: hereinbelow, referred to as a detecting element) having a plurality of pixels; 12 an optical package for enclosing the detecting element 11; 13 a reading circuit; 14 outputs (θE, θW, θS, θN) of pixels of the east, west, south, and north; and 15 analog peak holders (VE, VW, VS, VN) between pixels.

Reference numeral 16 denote comparators provided in correspondence to the outputs (θE, θW, θS, θN) of the pixel of the east, west, south, and north. Each comparator executes a normalization by the averaged pixel output and, after that, performs a comparison. Reference numeral 17 A/D converters provided in correspondence to the analog peak holders (VE, VW, VS, VN) between the pixels. Each A/D converter A/D converts the signal normalized by a reference output in a manner similar to the comparator 16.

Reference numeral 18 adders for adding θE, θW, θS, and θN and VE, VW, VS, and VN with respect to the east, west, south, and north, respectively, thereby obtaining (θE + VE), (θW + VW), ...; and 19 angle generators for forming the pitch angle θP from θE and θW and the roll angle θR from θN and θS, respectively; 20 a telemetry data processor for joining the pitch angle θP and the roll angle θR and generating the resultant angle as telemetry data. A signal processing unit is constituted by the adders 18, angle generators 19, and telemetry data processor 20.

Reference numeral 21 denotes an analog signal normalizer for forming a mean infrared intensity of the earth and setting it as a reference level of each measured angle; 22 an address generator for forming an address signal to read out θE, θW, θS, θN, VE, VW, VS, and VN; and 23 a reference clock generator.

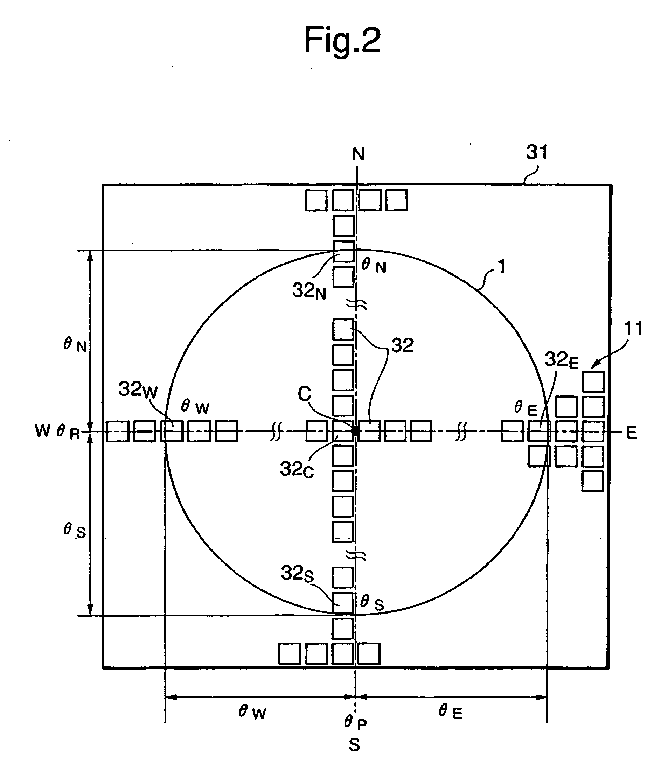

As shown in Fig. 2, the detecting element 11 is placed on a substrate 31 on which an image I of the earth is formed by scanning the earth horizon and detects the image I. In the detector, a plurality of pixels 32, 32, ... are arranged at predetermined intervals in the east and west (E-W) direction (which coincides with the electronic scan) as a pitch angle measuring direction and the north and south (N-S) direction (which crosses the electronic scan at a right angle) as a roll angle measuring direction of the substrate 31, respectively. In this instance, since the scan cannot be directly performed in the measurement in the roll angle measuring direction, the pixels 32 located on the center, are lined in the north and south direction when all of the scans in the east and west direction are executed.

In the earth sensor, the pitch angle θP and the roll angle θR made between the center axis of the earth and the optical axis of the earth sensor are obtained on the basis of the image I of the earth by the detecting element 11.

First, the center C of the detecting element 11 is set to the optical axis of the earth sensor and the number of pixels from a pixel 32C of the center C of the detecting element 11 up to a pixel 32W on the west end is counted, thereby obtaining θW. Similarly, θE is obtained by counting the number of pixels from the pixel 32C to a pixel 32E on the east end.

If the number of pixels 32 is sufficiently large, it is possible to fairly obtain a demanded precision by merely counting the number of pixels. When it is desired to further improve the precision, however, it is sufficient that analog levels of the pixels 32W and 32E on the east and west ends are read, respectively.

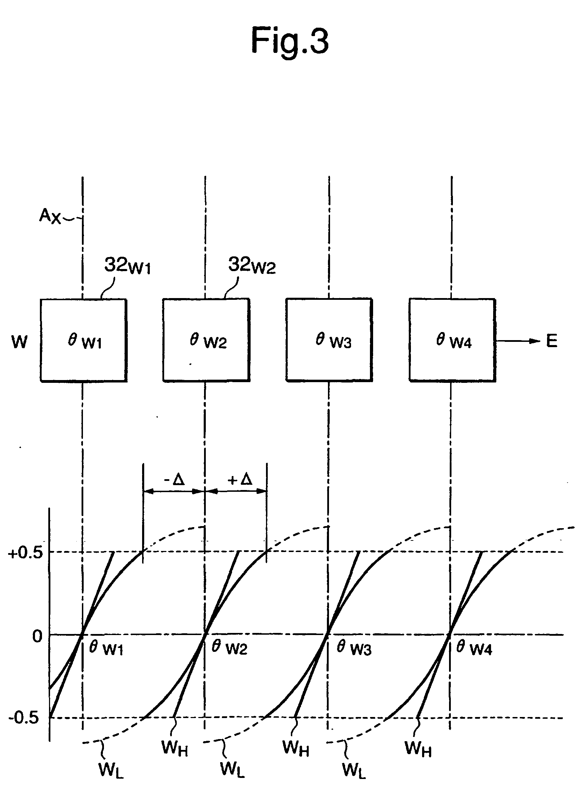

Fig. 3 is a diagram showing a relation between the pixels 32, 32, ... and output signals when an optical axis AX of the earth sensor is moved from the west W to the east E in the pitch angle direction (east and west direction).

In the diagram, a leading edge of the waveform is changed because the angle corresponding to the atmosphere of the earth is different depending on the altitude of the satellite. For example, in a low orbit, although the waveform becomes non-linear at the end of the pitch width of the pixel 32, a continuity of the signal can be held due to a repeat of a waveform WL.

In this instance, when the optical axis AX of the earth sensor moves from a pixel 32W1 onto a pixel 32W2, as for a micro angle fluctuation of the pitch angle θP, the angle can be read by approximating an angle of the output to the line or setting it to the curve in a range of +Δ and -Δ. That is, the pitch angle θP can be expressed by -θW2±Δ. The roll angle θR can be also expressed by the method that is entirely similar to that of the pitch angle θP.

In the earth sensor, the pitch angle θP and roll angle θR can be obtained by the following equations.$\begin{matrix}\begin{matrix}\text{θP = 1/2{θE + VE - (θW + VW)} = 1/2(θE - θW + VE - VW)} \\ \text{θR = 1/2{θN + VN - (θS + VS)} = 1/2(θN - θS + VN - VS)}\end{matrix}\end{matrix}$

According to the earth sensor, since the non-cooling two-dimensional array infrared detecting element 11 having the plurality of pixels is used, a static earth sensor can be constructed. Since the mechanical vibrating mechanism system for the through scan such as a conventional mirror drive unit is unnecessary, there is no fear that mechanical resonance with those mechanisms is caused. Therefore, the high precision pitch angle θP and roll angle θR can be obtained in a stable state and the attitude detection can be stably executed at a high precision.

Since the electronic scan is executed by the non-cooling two-dimensional array infrared detecting element 11, the mechanical vibrating mechanism system such as a conventional mirror drive unit is not needed, so that a small and light earth sensor can be constructed.

In the earth sensor, as shown in Fig. 3, the continuity of the signal can be held by the repeat of the waveform WL in the low orbit. In a high orbit, however, since the dead zone exists in the end of the pitch width of each pixel 32, when the angle change occurs in the zone, the repeat of the waveform WH becomes discontinuous, so that the angle change cannot be continuously measured.

In case of the earth sensor, the pixels 32, 32, ... exist in the whole area of the pitch width of the detecting element 11. The dead zones exist because frames of the pixels exist between the pixels 32, 32. Since an output change area of the analog signal corresponding to the angle change enters the area, when the altitude of the satellite is changed, there is such an inconvenience that the measured angle between the pixels becomes discontinuous, the linearity is lost and the measuring precision is decreased, or the like.

When the number of pixels 32, 32, ... of the detecting element 11 is not sufficient, some analog process or a special use is necessary. From the viewpoint of a resolution and a visual field, it is insufficient. Then, we propose an earth sensor which will be explained hereinbelow.

### Embodiment of the Invention

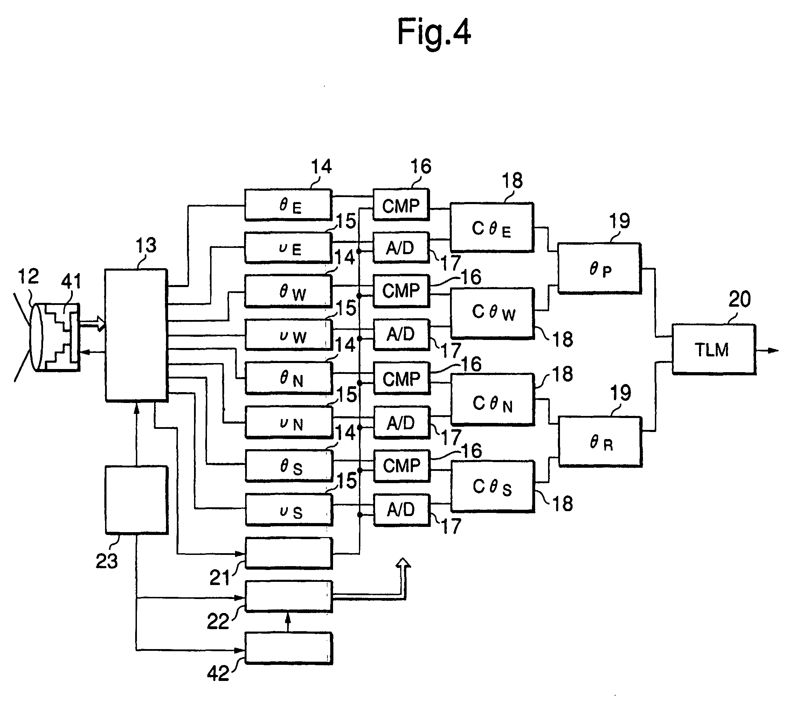

Fig. 4 is a constructional diagram showing the earth sensor of the invention. The same reference numerals shall also be applied to the same component elements as those in Fig. 1 and explanations are omitted.

In the diagram, reference numeral 41 denotes a non-cooling two-dimensional array infrared detecting element (infrared detector: hereinbelow, simply referred to as a detecting element) having a plurality of pixels and reference numeral 42 indicates an address controller for diagonally re-scanning an inherent address circuit.

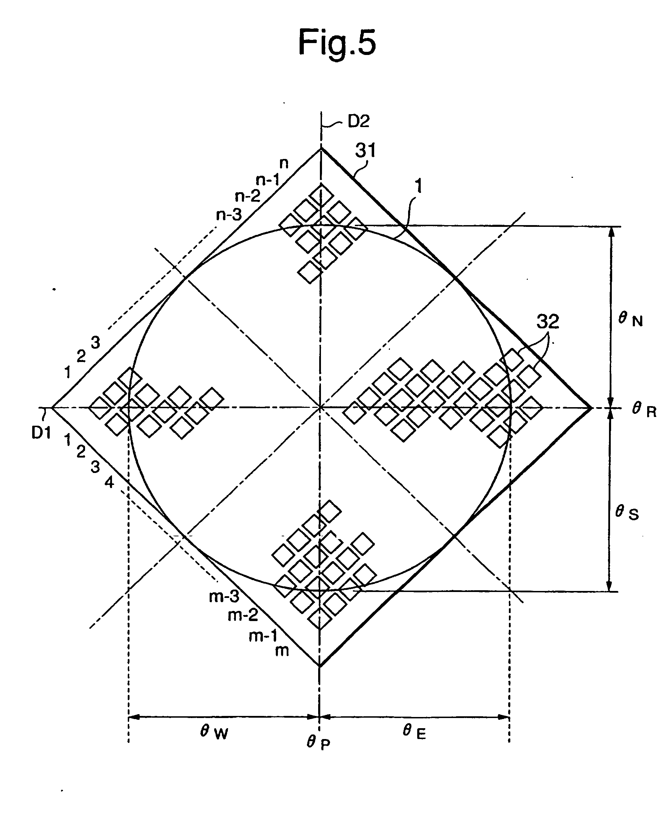

As shown in Fig. 5, the detecting element 41 is placed on the substrate 31 on which the image I of the earth is formed by scanning the earth horizon and detects the image I. The pixels 32, 32, ... are arranged on the substrate 31 in a manner of a matrix of m pixels in the longitudinal direction x n pixels in the lateral direction. An axis of the east and west direction of the earth is set to a diagonal line D1 of those pixels 32, 32, ... and an axis of the north and south direction of the earth is set to a diagonal line D2, respectively. The pitch angle θP is measured by the pixels 32, 32, ... on the diagonal line D1 and the roll angle θR is measured by the pixels 32, 32, ... on the diagonal line D2.

In this instance, the pixels 32, 32, ... arranged in a matrix manner are expressed by using (m, n). θW denotes an angle on the west side from the optical axis of the earth sensor and, similarly, θE indicates an angle on the east side, θN denotes an angle on the north side, and θS indicates an angle on the south side.

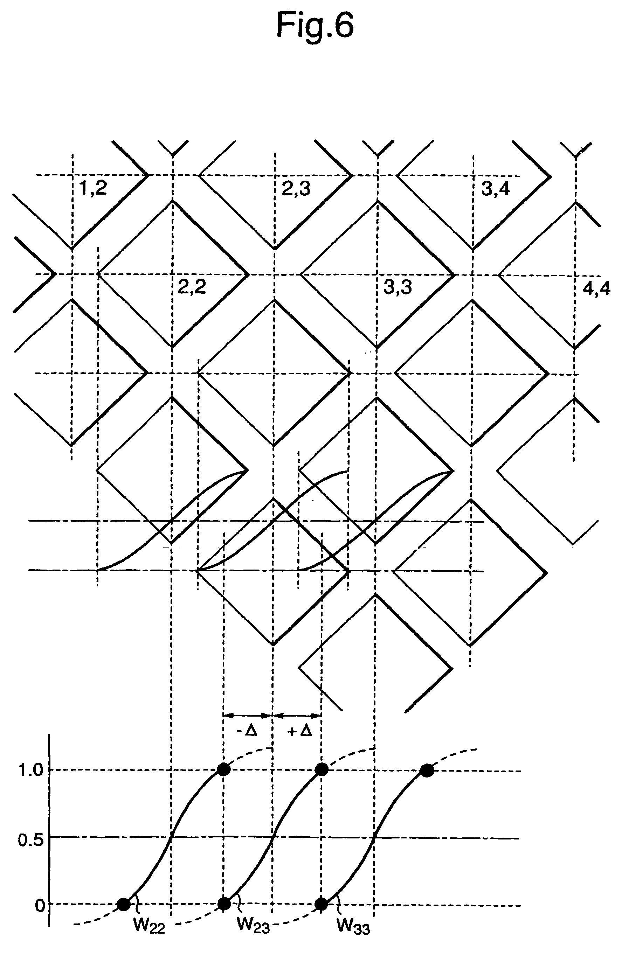

Fig. 6 is a diagram showing a relation between the pixels 32, 32, ... and output signals when the optical axis of the earth sensor is moved on the diagonal line D1 of the pixels 32, 32, ....

In the earth sensor, the normal electronic scan is executed in accordance with the order of (1, 1), (1, 2), (1, 3), ..., (1, n-1), (1, n), (2, 1), (2, 2), ..., (m, n-1), and (m, n).

After that, as shown in Fig. 6, the re-scan is executed in accordance with the order of (1, 2), (2, 2), (2, 3), (3, 3), (3, 4), (4, 4), .... For example, the visual field of the pixel (2, 3) increases as much as √2 times in the directions of the pitch angle θP and roll angle θR, respectively. Therefore, an angle of visibility of the whole earth sensor can be spread as much as √2 times (about 1.41 times).

Although the resolution is inherently deteriorated as much as √2 times, by using two lines of the line (1, 2), (2, 3), (3, 4), (4, 5), ... and the line of (2, 2), (3, 3), (4, 4), (5, 5), the resolution can be contrarily raised as much as √2/2 (about 0.7 times).

Further, since the pixels in the longitudinal direction are overlapped in Fig. 6, a realization of subdivision of the measured angle can be executed by only the signal near 0.5 when the output signals are normalized by 1.0. For example, a waveform W22 near 0 and 1 of the pixel (2, 2) is non-linear but a linearity can be finely held in the waveform near 0.5. As for the other waveform W23 of the pixel (2, 3) and the like as well, it is similar to the above. Therefore, the precision of the measured angle between the pixels 32, 32, ... can be improved.

In the earth sensor as well, the pitch angle θP and roll angle θR can be obtained by the following equations.$\text{θP = 1/2(θE + VE - (θW + VW)} = 1/2(θE - θW + VE - VW)}$$\text{θR = 1/2(θN + VN - (θS + VS)} = 1/2(θN - θS + VN - VS)}$

As compared with the earth sensor of the illustrating embodiment in which the pixels 32 of only one line are used, according to the earth sensor of the present embodiment, two lines are used, data is obtained so as to be overlapped, thereby preventing the occurrence of the discontinuity. Simultaneously, non-linear data in both of the upper and lower ends are rejected and the angle is obtained on the basis of data having a good linearity on the center. Consequently, there is such an effect that the precision of the measured angle between the pixels 32, 32, ... is improved and, simultaneously, even when the altitude of the satellite is changed, no discontinuous point occurs on the measured angle and the measuring precision is not changed.

Since the east and west axis of the earth is set to the diagonal line D1 of the pixels 32, 32, ... of the detecting element 41 and the north and south axis of the earth is set to the diagonal line D2, respectively, and data is obtained so that the pixels 32, 32, ... of two lines are overlapped, the angle of visibility can be spread as much as √2 times and the resolution can be raised up to √2 times as compared with those of the earth sensor of the illustrating embodiment. Consequently, the performance is double, in other words, it is equivalent to the detector which contains double picture cells.

As mentioned above, according to the earth sensor of the present invention, since the infrared detector is allowed to have a plurality of pixels arranged at predetermined intervals in the direction which coincides with the scan of the substrate and the direction which crosses the scan at a right angle, respectively, the mechanism such as a conventional mirror drive unit which causes a vibration is eliminated and a fear that the mechanical resonance with the mechanism is caused is eliminated, so that the high precision angle measurement can be executed at a stable state. Therefore, the attitude detection can be stably executed at a high precision.

Since the mechanical vibrating mechanism system such as a conventional mirror drive unit is not needed, it is possible to realize the compactness and light-weightedness.

## Claims

1. An earth sensor which comprises a substrate (31) which is mounted on a satellite or the like and on which an image of the earth is formed by scanning the earth horizon;
an infrared detector (11) which is placed on said substrate (31) and which detects said image;
and a signal processing unit which processes an output signal of said infrared detector (11), wherein said infrared detector (11) has a plurality of pixels (32) arranged on said substrate in a matrix manner at regular intervals in the direction which coincides said scan of said substrate (31) and the direction which crosses said scan at a right angle, respectively,
**characterised in that** one of the diagonal lines of said substrate indicates the direction which coincides with said scan and the other diagonal line of the substrate indicates the direction which crosses said scan at a right angle.

2. The earth sensor according to claim 1, wherein said scan is an electronic scan.

3. The earth sensor according to claim 1 or 2, wherein said infrared detector (11) is a non-cooling two-dimensional array infrared detecting element.

## Patentansprüche

1. Erdsensor mit
einem Substrat (31), das auf einem Satelliten oder einer ähnlichen Vorrichtung montiert ist, und auf dem durch Scannen des Erdhorizonts ein Bild der Erde erzeugt wird;
einem auf dem Substrat (31) angeordneten Infrarotdetektor (11) zum Erfassen des Bildes; und
einer Signalverarbeitungseinheit zum Verarbeiten eines Ausgangssignals des Infrarotdetektors (11), wobei der Infrarotdetektor (11) eine Vielzahl von Pixeln (32) aufweist, die in regelmäßigen Intervallen in Richtung eines Scanvorgangs des Substrats (31) bzw. senkrecht zur Richtung des Scanvorgangs matrixförmig auf dem Substrat angeordnet sind;
**dadurch gekennzeichnet, dass**
eine Diagonallinie des Substrats die Richtung anzeigt, in der der Scanvorgang ausgeführt wird, und eine andere Diagonallinie des Substrats die Richtung senkrecht zur Richtung des Scanvorgangs anzeigt.

2. Erdsensor nach Anspruch 1, wobei der Scanvorgang ein elektronischer Scanvorgang ist.

3. Erdsensor nach Anspruch 1 oder 2, wobei der Infrarotdetektor (11) ein nicht gekühltes Infrarotdetektorelement mit einer zweidimensionalen Matrix ist.

## Revendications

1. Capteur terrestre qui comprend un substrat (31) qui est monté sur un satellite ou similaire et sur lequel une image de la Terre est formée en balayant l'horizon terrestre ;
un détecteur à infrarouges (11) qui est placé sur ledit substrat (31) et qui détecte ladite image ;
et une unité de traitement de signaux qui traite un signal de sortie dudit détecteur à infrarouges (11), dans lequel ledit détecteur à infrarouges (11) a une pluralité de pixels (32) agencés sur ledit substrat à la manière d'un matrice à intervalles réguliers dans la direction qui coïncide au dit balayage dudit substrat (31) et la direction qui croise ledit balayage à angle droit, respectivement,
**caractérisé en ce qu'**une ligne diagonale dudit substrat indique la direction qui coïncide avec ledit balayage et une autre ligne diagonale du substrat indique la direction qui croise ledit balayage à angle droit.

2. Capteur terrestre selon la revendication 1, dans lequel ledit balayage est un balayage électronique.

3. Capteur terrestre selon la revendication 1 ou 2, dans lequel ledit détecteur à infrarouges (11) est un élément de détection à infrarouges à tableau bidimensionnel non réfrigérant.
